Europäisches Patentamt

(19) European Patent Office

Office européen des brevets

(11) Veröffentlichungsnummer: **0 263 784**
**B1**

(12) # EUROPÄISCHE PATENTSCHRIFT

(45) Veröffentlichungstag der Patentschrift:
**10.01.90**

(51) Int. Cl.⁴: **B60P 7/08**, B60P 1/52

(21) Anmeldenummer: **87810507.1**

(22) Anmeldetag: **03.09.87**

(54) **Palettentransportgerät.**

(30) Priorität: **08.10.86 CH 4005/86**

(43) Veröffentlichungstag der Anmeldung:
**13.04.88 Patentblatt 88/15**

(45) Bekanntmachung des Hinweises auf die Patenterteilung:
**10.01.90 Patentblatt 90/2**

(84) Benannte Vertragsstaaten:
**AT BE CH DE ES FR GB IT LI NL SE**

(56) Entgegenhaltungen:
**DE-A- 3 107 745**
**US-A- 3 641 940**
**US-A- 3 800 713**
**US-A- 4 089 275**
**US-A- 4 134 345**
**US-A- 4 234 278**
**US-A- 4 349 302**
**US-A- 4 375 932**
**US-A- 4 379 668**

(73) Patentinhaber: **Gebrüder Frech AG, Gewerbestrasse 4,
CH-4450 Sissach(CH)**

(72) Erfinder: **Riner, Felix, Sonnhalde 811, CH-5262 Frick(CH)**

(74) Vertreter: **Feldmann, Paul David et al, c/o
Patentanwaltsbüro FELDMANN AG Kanalstrasse 17,
CH-8152 Glattbrugg(CH)**

## Beschreibung

Die vorliegende Erfindung betrifft ein fahrbares bzw. selbstfahrendes Palettentransportgerät zur Aufnahme von Paletten, mit mehreren Reihen von senkrecht zur Verschiebungsrichtung der Paletten angeordneten Rollen und mindestens einem Palettenarretierungsorgan. Solche Geräte werden insbesondere für den Transport von Flugzeugpaletten auf dem Flugplatzareal verwendet.

Geräte dieser Art werden von der Anmelderin bereits seit vielen Jahren angeboten unter den Typenbezeichnungen 7730, 7650 A und 7750. Während die beiden erstgenannten Typen gezogene Anhänger sind, ist der letztgenannte Typ ein selbstfahrendes Gerät, welches zusätzliche Antriebsmittel zur Bewegung der Paletten in der Verschiebungsrichtung aufweist. Dieses Gerät ist auch zur Beladung nicht selbstfahrender Anhänger geeignet.

Nachdem die Paletten auf die Geräte geschoben sind, müssen sie vor dem eigentlichen Transport auf dem Flugplatzareal gegen ungewollte Verschiebungen in der Verschiebungsrichtung gesichert werden. Seitlich zur Verschiebungsrichtung sind die Paletten durch Schienen und in der Aufschiebrichtung durch einen festen Anschlag gesichert. In der Gegenrichtung werden die Paletten durch bewegliche Arretierungsorgane gesichert.

Die bisher bekannten Arretierungsorgane sind technisch aufwendig. Sie werden von der überfahrenden Palette aus der Arretierungslage direkt oder mittelbar durch Schwenkklappen hinuntergedrückt. Hierzu verlaufen die Schwenkachsen der Arretierungsorgane parallel zu den Achsen der Transportrollen, auf denen die Palette läuft. Weil sie jeweils zwischen zwei Rollen angeordnet sind, die relativ nahe beieinander liegen, müssen die Arretierungsorgane über komplizierte mechanische Systeme betätigt werden, um die Paletten vor dem Entladen wieder zu entriegeln.

Ferner bedingt die Anordnung der Arretierungsorgane mit einer Schwenkachse parallel zu den Rollenachsen eine gewölbte Arretierungsfläche mit einem Radius entsprechend der Distanz zwischen Schwenkachse und Anschlagfläche am Palett. Die Folge ist, dass in der arretierten Position zwischen der Palette und der Arretierfläche des Arretierungsorganes ein relativ grosser Spalt verbleibt. Die Folge ist ein Hin- und Herrutschen der Palette auf dem Transportgerät und ständige Schläge auf das Arretierungsorgan. Häufige Schäden an den Arretierungsorganen sind daher unvermeidlich. Auch Verschiebungen des Frachtgutes auf der Palette treten auf, manchmal mit gefährlichen Gewichtsverlagerungen.

Es ist die Aufgabe der vorliegenden Erfindung ein Paletttransportgerät zu schaffen, bei der die vorbeschriebenen Nachteile behoben werden.

Diese Aufgabe löst ein Paletten-Transportgerät gemäss Oberbegriff des Patentanspruches 1 mit den kennzeichnenden Merkmalen desselben.

Die Kombination von einer in der Verschiebungsrichtung verlaufenden Schwenkachse und einer dreidimensional gewölbten Betätigungsfläche, derart, dass beim Ueberfahren eines aufzuladenden Paletts dieses nach unten gedrückt wird, ermöglicht es, eine genau senkrecht zur Verschiebungsrichtung verlaufende Arretierungsfläche zu erhalten.

Die Rückstellung des Arretierungsorganes kann am einfachsten durch eine Torsions- oder Zugfeder bewerkstelligt werden.

Die Anordnung der Schwenkachse des Arretierungsorgans senkrecht zu den Rollenachsen ermöglicht auch, falls erwünscht, ein pneumatisch oder hydraulisch betätigbares Betätigungsorgan parallel zu den Achsen der Rollen zwischen denselben anzuordnen.

Weitere erfindungsgemässe Ausgestaltungsformen und ihre Wirkungsweise sind in der nachfolgenden Beschreibung anhand der anliegenden Zeichnung erläutert.

Es zeigt:

Figur 1 eine Gesamtansicht eines Paletten-Transportgerätes von oben;

Figur 2 eine Seitenansicht eines Palettenarretierungsorgans mit Betätigungsmittel teilweise im Schnitt und

Figur 3 dasselbe Organ in Ansicht von oben.

Figur 4 zeigt eine Variante des Arretierungsorgans wiederum in Seitenansicht und

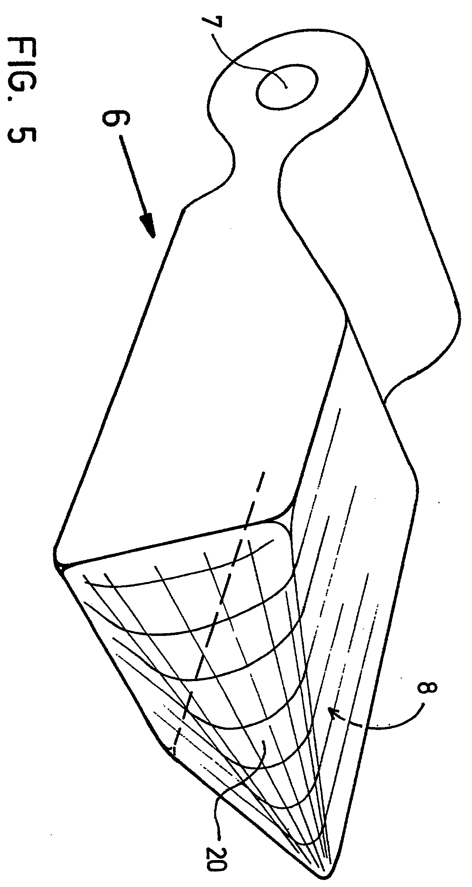

Figur 5 zeigt das Formteil des Arretierungsorgans in perspektivischer Darstellung.

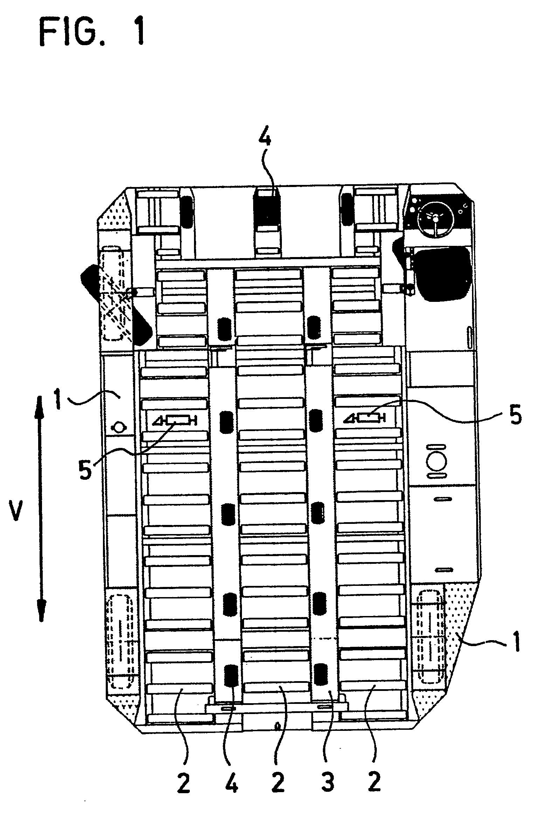

In der Figur 1 ist ein selbstfahrendes Paletten-Transportgerät dargestellt. Zwei seitliche, in Fahrzeuglängsrichtung verlaufende Erhöhungen bilden die Führungen 1 für die zu ladenden und zu transportierenden Frachtpaletten. Diese Führungen ersetzen die bei den nicht selbstfahrenden Paletten-Transportgeräten vorhandenen Führungsschienen, die in der Verschiebungsrichtung V der Paletten verlaufen. Bei den selbstfahrenden Geräten ist die Verschiebungsrichtung V der Paletten gleich der Bewegungsrichtung des Fahrzeuges, während bei den gezogenen, in Anhängerform gebauten Geräten die Verschiebungsrichtung der Paletten senkrecht zur Fahr- bzw. Zugrichtung des Anhängers verläuft.

Zwischen den beiden seitlichen Führungen 1 sind drei Reihen von senkrecht zur Verschiebungsrichtung der Paletten angeordneten, walzenförmigen Rollen 2 vorhanden. Zwischen den drei Reihen liegen gegenüber der Rollfläche der Rollen 2 leicht nach unten versetzte Träger 3. In den Trägern 3 sind mehrere bereifte Räder 4 angeordnet, die mindestens teilweise getrieben sind und der Verschiebung der Paletten dienen.

Lediglich andeutungsweise sind zwei Arretierungsorgane 5 schematisch dargestellt. Deutlich erkennt man jedoch deren Anordnung zwischen zwei in der Verschiebungsrichtung benachbarten Rollen 2.

Das eigentliche Arretierungsorgan 5 umfasst einen Formkörper 6, welcher von einer am unteren Ende desselben angeordneten Achse 7 durchsetzt ist. Diese Schwenkachse 7 verläuft senkrecht zur Längsachse des Formkörpers 7 in der Verschiebungsrichtung V der Paletten und somit auch senkrecht zur Richtung der Lagerachsen der Rollen 2.

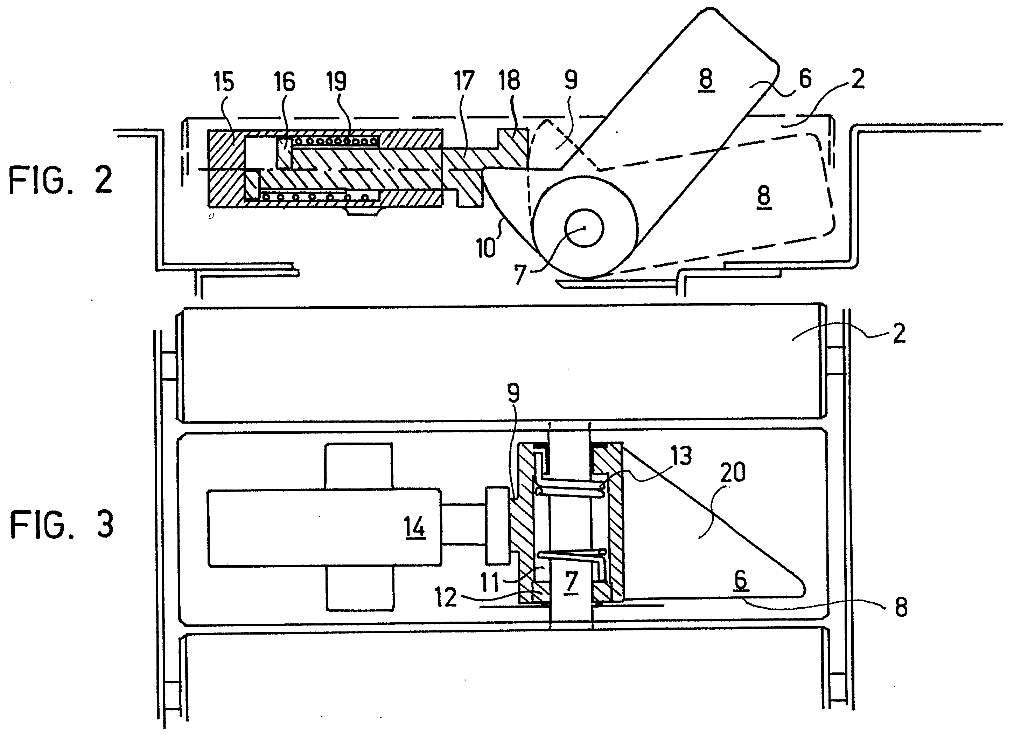

Selbstverständlich liegt die Schwenkachse 7 auch unterhalb der Rollenauflagefläche. In der Zeichnung ist der Formkörper 6 ausgezogen in der Arretierlage und strichliniert in der Ueberfahr- oder Entriegelungslage dargestellt. Die in der Figur 2 sichtbare Fläche ist die vollständig ebene Arretierungsfläche 8. In einer zur Längsachse des Formkörpers 6 abweichenden Richtung ist am gelagerten Ende des Formkörpers eine Nase 9 ausgeformt.

Die Nase hat eine zur Unterseite des Formkörpers 6 gebogene Gleitfläche 10. Die Schwenkachse 7 lagert in einer einseitig erweiterten Bohrung 11, die von einer Lagerbuchse 12 verschlossen ist. In der Bohrung 11 liegt ein Torsionsfeder 13, die das Formstück 6 in die ausgezogen dargestellte Arretierlage drückt.

In einer einfachsten Ausführung, die hier nicht dargestellt ist, liesse sich das Formstück an einem daran direkt oder mittelbar angreifenden Kabel aus der Arretierlage in die Entriegelungslage schwenken. Im dargestellten Beispiel wirkt jedoch ein Betätigungsorgan 14 auf den Formkörper 6. Im konkreten Fall ist dies eine hydraulische oder pneumatische Kolben-Zylindereinheit. Die aus dem Zylinder 15 herausragende Kolbenstange 17 des Kolbens 16 weist einen endständigen Druckkopf 18 auf, der an der Gleitfläche 10 der Nase 9 anliegt. Gezeigt ist ein einseitig beaufschlagbarer Zylinder 15 mit einer Druckfeder 19 zur Rückführung des Kolbens 16. Wird der Zylinder 15 mit Druck beaufschlagt, so verschiebt sich der Kolben nach rechts und schwenkt den Formkörper 6 von der Arretierungslage in die strichliniert dargestellte Entriegelungslage.

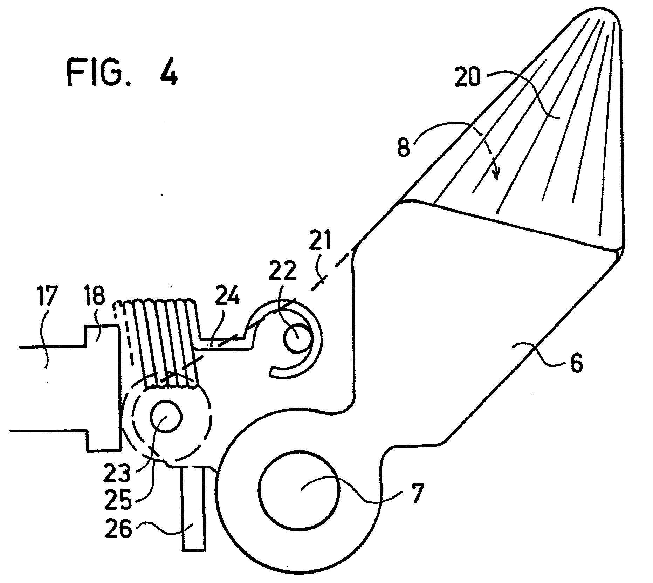

In der Figur 4 ist eine Variante dargestellt, bei der die Form des Formkörpers 6 gegenüber der Ausführung nach den Figuren 2 und 3 variiert. Die Grundform des Formkörpers 6 ist auch hier ein Quader, dessen Stirnseiten parallel sind und schräg zur Längsachse des Quaders verlaufen. Dabei ist wiederum eine Ecke des Quaders abgeschnitten und die Schnittfläche 20 gerundet. Während des Ueberrollens streicht die Palette Entlang der dreidimensional gewölbten Betätigungsfläche. Die ebene Arretierungsfläche verläuft hinter der Bildebene und hat die Form eines Rhomboids.

Der Formkörper, der beispielsweise als Guss-Stück hergestellt wird, hat eine angeformte Lagerbuchse, in der die Schwenkachse 7 lagert. Zwei seitlich über dem Lager angelaschte Wangen 21 werden von einem Zapfen 22 und einer Achse 23 durchsetzt. Am Zapfen 22 ist eine Rückzugfeder 24 eingehängt, die den Formkörper 6 in die dargestellte Arretierungslage zieht. Auf der Achse 23 sitzt eine Rolle oder ein Kugellager 25, welches am Druckkopf 28 der Kolbenstange 17 anliegt. Dies ermöglicht es wiederum den Formkörper 6 über die hier nicht gezeigte Kolben- Zylindereinheit aus der Arretierungslage in die Entriegelungslage zu schwenken. Ein Anschlag 26 definiert die Endstellung des Formkörpers 6 in der Arretierlage.

Kernstück der Erfindung ist jedoch der Formkörper 6, der eine relativ komplexe Gestalt hat. Seine dreidimensionale, gewölbte Betätigungsfläche 20 bewirkt bei der Druckausübung durch dies überrollende Palette immer eine Kraftkomponente senkrecht zur Verschiebungsrichtung des Paletts und somit eine Kraftumlenkung um 90°. Diese Umlenkung ermöglicht eine exakt vertikal verlaufende Arretierungsfläche die genau bündig am Palett zum Anschlag kommt. Ferner wird durch die Umlenkung auch eine Anordnung des gesamten Palettenarretierungsorgans mit den Betätigungsmitteln parallel zu den Achsen der Rollen 2 zwischen denselben ermöglicht.

## Patentansprüche

1. Fahrbares bzw. selbstfahrendes Palettentransportgerät zur Aufnahme von Paletten, mit mehreren Reihen von senkrecht zur Verschiebungsrichtung (V) der Paletten angeordnete Rollen und mindestens einem Palettenarretierungsorgan, dadurch gekennzeichnet, dass das Arretierungsorgan (5) einen Formkörper (6) umfasst, der um eine in der Verschiebungsrichtung (V) verlaufende Achse (7) schwenkbar angeordnet ist und eine dreidimensional gewölbte Betätigungsfläche (20) aufweist, die durch ein aufzuladendes Palett überfahren wird, und dabei eine senkrecht zur Schwenkachse (7) wirkende Kraftkomponente bewirkt, und dass der Formkörper (6) eine Arretierungsfläche (8) aufweist, welche senkrecht zur Verschiebungsrichtung (V) und zur Schwenkachse verläuft und in der Arretierlage in den Ueberfahrbereich der Palette ragt.

2. Palettentransportgerät nach Anspruch 1, dadurch gekennzeichnet, dass auf den Formkörper (6) eine Rückstellfeder (13,24) wirkt, welche den Formkörper in die Arretierlage drückt.

3. Palettentransportgerät nach Anspruch 2, dadurch gekennzeichnet, dass die Rückstellfeder eine um die Schwenkachse (7) im Formkörper angeordnete Torsionsfeder (13) ist.

4. Palettentransportgerät nach Anspruch 1, dadurch gekennzeichnet, dass die Rückstellfeder eine an einem Zapfen (22) am Formkörper (6) angreifende Zugfeder (24) ist.

5. Palettentransportgerät nach Anspruch 1, dadurch gekennzeichnet, dass am Formkörper (6) ein senkrecht und exzentrisch zur Schwenkachse (7) angreifendes, pneumatisch oder hydraulisch beaufschlagtes, gegen die Kraft der Rückstellfeder (13,24) wirkendes Betätigungsorgan (14) angreift, welches den Formkörper (6) aus der Verschiebungsebene der Palette schwenkt, wobei die Betätigungsrichtung in der Längsrichtung des Betätigungsorganes (14) und parallel zu den Rollenachsen verläuft.

6. Palettentransportgerät nach Anspruch 5, dadurch gekennzeichnet, dass das Betätigungsorgan (14) eine zweiseitig beaufschlagte Kolben-Zylindereinheit (15-18) ist.

7. Palettentransportgerät nach Anspruch 5, dadurch gekennzeichnet, dass das Betätigungsorgan (14) eine einseitig beaufschlagte Kolben-Zylindereinheit (15-18) mit Rückstelldruckfeder (19) ist.

8. Palettentransportgerät, nach Anspruch 5, dadurch gekennzeichnet, dass am Formkörper (6) eine exzentrisch zur Schwenkachse (7) verlaufende Gleitfläche (10) vorgesehen ist, an der das Betätigungsorgan (14) angreift.

9. Palettentransportgerät nach Anspruch 5, dadurch gekennzeichnet, dass am Formkörper (6) eine exzentrische, parallel zur Schwenkachse angeordnete Rolle (25) gelagert ist, auf die das Betätigungsorgan (14) wirkt.

## Claims

1. Mobile or automotive pallet transport device for receiving pallets, with several rows of rollers at right angles to the pallet displacement direction (V) and at least one pallet locking member, characterized in that the locking member (5) incorporates a shaped member (6), which is pivotable about a pin (7) passing in the displacement direction (v) and has a three-dimensionally convexly curved actuating or operating face (20) over which passes a pallet to be loaded and brings about a force component acting at right angles to pivot pin (7), and that the shape member (6) has a locking face (8), which is at right angles to the displacement direction (V) and to the pivot pin and in the locked position projects into the pallet overtravelling area.

2. Pallet transport device according to claim 1, characterized in that a restoring spring (13, 24) acts on the shaped member (6) and forces the latter into the locked position.

3. Pallet transport device according to claim 2, characterized in that the restoring spring is a torsion spring (13) arranged in the shaped member about the pivot pin (7).

4. Pallet transport device according to claim 1, characterized in that the restoring spring is a tension spring (24) acting on a lug (22) on shaped member (6).

5. Pallet transport device according to claim 1, characterized in that on the shaped member (6) acts an actuating member (14) at right angles and eccentrically to the pivot pin (7), which is pneumatically or hydraulically operated and functions counter to the tension of the restoring springs (13, 24), said member (14) pivoting the shaped member (6) out of the pallet displacement plane, the actuating direction running in the longitudinal direction of the operating member (14) and parallel to the roller axles.

6. Pallet transport device according to claim 5, characterized in that the operating member (14) is a piston – cylinder unit (15–18) on which action takes place on both sides.

7. Pallet transport device according to claim 5, characterized in that the operating member (14) is a piston – cylinder unit (15–18), where action takes place on one side and having a restoring compression spring (19).

8. Pallet transport device according to claim 5, characterized in that on the shaped member (6) is provided a sliding face (10) passing eccentrically to the pivot pin (7) and on which acts the operating member (14).

9. Pallet transport device according to claim 5, characterized in that on the shaped member (6) is mounted an eccentric roller (25) parallel to pivot pin and on which acts the operating member (14).

## Revendications

1. Dispositif de transport pour palettes, respectivement mobile ou automobile, destiné à recevoir des palettes et comprenant plusieurs rangées de rouleaux agencés perpendiculairement à la direction de déplacement (V) des palettes, ainsi qu'au moins un organe d'arrêt des palettes, caractérisé par le fait que l'organe d'arrêt (5) comporte un corps moulé (6) qui est installé, à pivotement, autour d'un axe (7) s'étendant dans la direction du déplacement (V), et présente une surface d'actionnement (20) à bombement tridimensionnel, franchie par-dessus par une palette devant être chargée, et engendrant alors une composante de force agissant perpendiculairement à l'axe de pivotement (7); et par le fait que le corps moulé (6) possède une surface d'arrêt (8) qui s'étend perpendiculairement à la direction du déplacement (V) et à l'axe de pivotement et qui, dans la position d'arrêt, pénètre dans la zone de franchissement sus-jacente de la palette.

2. Dispositif de transport pour palettes, selon la revendication 1, caractérisé par le fait que le corps moulé (6) est soumis à l'action d'un ressort de rappel (13, 24), qui pousse ce corps moulé à la position d'arrêt.

3. Dispositif de transport pour palettes, selon la revendication 2, caractérisé par le fait que le ressort de rappel est un ressort de torsion (13) disposé, dans le corps moulé, autour de l'axe de pivotement (7).

4. Dispositif de transport pour palettes, selon, la revendication 1, caractérisé par le fait que le ressort de rappel est un ressort de traction (24), venant en prise avec un téton (22) solidaire du corps moulé (6).

5. Dispositif de transport pour palettes, selon la revendication 1, caractérisé par le fait qu'un organe de manœuvre (14) agissant à l'opposé de la force du ressort de rappel (13, 24), sollicité pneumatiquement ou hydrauliquement et venant en prise perpendiculairement et de manière excentrée par rapport à l'axe de pivotement (7), vient en prise avec le corps moulé (6) et fait pivoter ce corps moulé (6) hors du plan de déplacement de la palette, la direction d'actionnement s'étendant dans le sens longitudinal de l'organe de manœuvre (14), et parallèlement aux axer des rouleaux.

6. Dispositif de transport pour palettes, selon la revendication 5, caractérisé par le fait que l'organe de manœuvre (14) est un vérin (15 – 18) à sollicitation des deux côtés.

7. Dispositif de transport pour palettes, selon la revendication 5, caractérisé par le fait que l'organe de manœuvre (14) est un vérin (15 – 18) à sollicitation d'un côté, associé à un ressort de pression (19) assurant le rappel.

8. Dispositif de transport pour palettes, selon la revendication 5, caractérisé par le fait qu'il est prévu, sur le corps moulé (6), une surface de glissement (10) qui s'étend excentriquement par rapport à l'axe de pivotement (7), et avec laquelle l'organe de manœuvre (14) vient en prise.

9. Dispositif de transport pour palettes, selon la revendication 5, caractérisé par le fait qu'un rouleau excentré (25) disposé sur le corps moulé (6), parallèlement à l'axe de pivotement, est soumis à l'action de l'organe de manœuvre (14).

# FIG. 1

FIG. 2

15 16 19 17 18 9 8 6 2

8

10

7

EP 0 263 784 B1

2

FIG. 3

9

13

20

14

11

7

12

6

8

FIG. 4

FIG. 5

EP 0 263 784 B1